# EUROPEAN PATENT SPECIFICATION

(11) **EP 0 319 617 B1**
(45) Date of publication and mention of the grant of the patent: **11.05.1994**
(21) Application number: 87310722.1
(22) Date of filing: 07.12.1987
(51) Int. Cl.: C10M 159/12, C10M 137/10, C10M 137/02, C07F 9/165

(54) **Use of reaction products of trialkyl phosphites with elemental sulfur and process for making same**
Verwendung von Reaktionsprodukten von Trialkylphosphiten mit elementarem Schwefel und Verfahren zu ihrer Herstellung
Utilisation de produits de réaction de trialkyl phosphites avec du soufre et leur procédé de préparation

(43) Date of publication of application: 14.06.1989
(73) Proprietor: MOBIL OIL CORPORATION, New York New York 10017 (US)
(72) Inventor: Cardis, Angeline Baird, Florence New Jersey 08518 (US)
(74) Representative: Colmer, Stephen Gary

(56) References cited:
- FR-A- 1 312 167
- FR-A- 1 423 239
- GB-A- 1 347 845
- GB-A- 2 123 429
- US-A- 2 447 288
- US-A- 2 566 129
- US-A- 3 185 643
- US-A- 3 197 496
- US-A- 4 207 195
- US-A- 4 456 539
- US-A- 4 717 491

## Description

This invention relates to processes for making reaction products of trialkyl phosphites with elemental sulfur, and use of any of these products in lubricating oil formations. US Patent 3,984,448 discloses the use of metal oxides, such as those of copper, calcium, barium, magnesium, zinc, cadmium, 0,0-dialkylphosphorus acid esters to produce dialkyl thiophosphates.

US Patent 4,242,511 discloses the reaction of 0,S-dialkylthiophosphoric acid esters by subjecting a thiophosphate to partial dealkylation in forming the salt of the dealkylated product by treatment with an amine.

Although dithiophosphate products are known lubricant additives, their preparation involves processes resulting in noxious, undesirable by-products such as hydrogen sulfide and chloride-containing waste streams.

FR-A-1,312,167 and GB-1,015,201 disclose a process in which trimethyl and triaryl phosphites are reacted with elemental sulfur.

According to one aspect of the present invention there is provided a process for making a reaction product suitable for use as an additive in lubricating oils which process comprises reacting in the absence of catalyst a trialkyl phosphite with elemental sulfur in a mole ratio of sulfur to phosphite of between 0.8 and 1.2 at a temperature from 75° to 100°C.

Useful trialkyl phosphites include oleyl, 2-ethyl hexyl, 1,3-dimethylbutyl, tridecyl, isodecyl, octyl and butyl, and mixed phosphites of the above radicals.

According to a further aspect, this invention provides the use of a reaction product, prepared by reacting in the absence of catalyst a trialkyl phosphite having the formula (R₁O)₂ POR₂ wherein R₁ and R₂ are defined in claims 1 or 2 with elemental sulfur in a mole ratio of sulfur to phosphite of between 0.8 and 1.2 at a temperature from 75°C to 100°C, as an antiwear additive in lubricating oils.

If desirable, an unreactive organic solvent can be utilized. Preferably the organic solvent is selected from benzene, toluene, xylene, and mixed alkyl and aromatic petroleum distillates. The pulverulent sulfur should conveniently have a mean particle size of less than one millimeter, preferably less than 0.01 millimeters, as this enables the reaction to be shortened. The reaction is carried out, preferably under a blanket of material such as nitrogen or other non-reactive gas. At the end of the reaction period the reaction mixture is allowed to cool to room temperature. The desired product is then stripped under vacuum to remove solvent and volatile byproducts and can be subsequently filtered or decanted from the reaction vessel.

The resulting reaction products of this invention are used with lubricating oils or greases to the extent of from 0.1% to 10% by weight of the total composition. Furthermore, other additives, such as detergents, antioxidants, antiwear agents and the like may be present. These can include phenates, sulfonates, succinimides, zinc dialkyl dithiophosphates, polymers, calcium and magnesium salts of phenates and sulfonates, including overbased salts of the same, and the like.

The lubricants contemplated for use with the esters herein disclosed include mineral and synthetic hydrocarbon oils of lubricating viscosity, mixtures of mineral oils and synthetic oils and greases from any of these, including the mixtures. The synthetic hydrocarbon oils include long-chain alkanes such as cetanes and olefin polymers such as oligomers of hexane, octene, decene, and dodecene, etc. These vicinal diols are especially effective in synthetic oils formulated using mixtures of synthetic hydrocarbon olefin oligomers and lesser amounts of hydrocarbyl carboxylate ester fluids. The other synthetic oils, which can be used alone with the compounds of this invention, or which can be mixed with a mineral or synthetic hydrocaron oil, include (1) fully esterified ester oils, with no free hydroxyls, such as pentaerythritol esters of monocarboxylic acids having 2 to 20 carbon atoms, trimethylolpropane esters of monocarboxylic acids having 2 to 20 carbon atoms, (2) polyacetals and (3) siloxane fluids. Especially useful among the synthetic esters are those made from polycarboxylic acids and monohydric alcohols. More preferred are the ester fluids made by fully esterifying pentaerythritol, or mixtures thereof with di- and tripentaerythritol, with an aliphatic monocarboxylic acid contianing from 1 to 20 carbon atoms, or mixtures of such acids.

A wide variety of thickening agents can be used in the greases of this invention. Included among the thickening agents are alkali and alkaline earth metal soaps of fatty acids and fatty materials having from 12 to 30 carbon atoms per molecule. The metals are typified by sodium, lithium, calcium and barium. Fatty materials are illustrated by stearic acid, hydroxystearic acid, stearin, cottonseed oil acids, oleic acid, palmitic acid, myristic acid and hydrogenated fish oils.

Other thickening agents include salt and salt-soap complexes as calcium stearate-acetate (U.S. Patent No. 2,197,263), barium stearate acetate (U.S. Patent No. 2,564,561), calcium stearate-caprylate-acetate complexes (U.S. Patent No. 2,999,065), calcium caprylate-acetate (U.S. Patent No. 2,999,066), and calcium salts and soaps of low-, intermediate-and high-molecular weight acids and of nut oil acids.

Another group of thickening agents comprises substituted ureas, phthalocyanines, indanthrene, pigments such as perylimides, pyromellitdiimides, and ammeline.

The preferred thickening gelling agents employed in the grease compositions are essentially hydrophobic clays. Such thickening agents can be prepared from clays which are initially hydrophilic in character, but which have been converted into a hydrophobic condition by the introduction of long chain hydrocarbon radicals onto the surface of the clay particles prior to their use as a component of a grease composition, as, for example, by being subjected to a preliminary treatment with an organic cationic surface active agent, such as an onium compound. Typical onium compounds are tetraalkylammonium chlorides, such as dimethyl dioctadecyl ammonium choloride, dimethyl dibenzyl ammonium chloride and mixtures thereof. This method of conversion, being well known to those skilled in the art, is believed to require no further discussion, and does not form a part of the present invention. More specifically, the clays which are useful as starting materials in forming the thickening agents to be employed in the grease compositions, can comprise the naturally occurring chemically unmodified clays. These clays are crystalline complex silicates, the exact composition of which is not subject to precise description, since they vary widely from one natural source to another. These clays can be described as complex inorganic silicates such as aluminum silicates, magnesium silicates, barium silicates, and the like, containing, in addition to the silicate lattice, varying amounts of cation-exchangeable groups such as sodium. Hydrophilic clays which are particularly useful for conversion to desired thickening agents include montmorillonite clays, such as bentonite, attapulgite, hectorite, illite, saponite, sepiolite, biotite, vermiculite, zeolite clays, and the like. The thickening agent is employed in an amount from about 0.5 to about 30, and preferably from 3 percent to 15 percent by weight of the total grease composition.

Having described the invention in general aspects, the following examples are offered as specific illustrations. Parts are by weight.

### EXAMPLE 1

A one-liter flask was charged with 209.3 grams of tris-2-ethylhexylphosphite and 16 grams of sulfur under a nitrogen atmosphere. The initial reaction elevated the temperature to 109°C. When the temperature started to decline, heat was applied to maintain 100°C for eight hours. The product when analyzed was determined to contain 6.7 percent of phosphorus and 7.5 percent of sulfur.

### EXAMPLE 2

In accordance with the procedure of Example 1 a product was made from 208 grams of tri-isopropyl phosphite and 32 grams of sulfur. Analysis of the product showed 6.57 percent of phosphorus and 11.6 percent of sulfur.

**TABLE 1**

| **FOUR BALL WEAR TEST SCAR DIAMETER (mm) 1/2 Inch Balls, 52100 Steel, 60 Kg., 30 Minutes, 1.5% Additive** | | | | |
|---|---|---|---|---|
| Temperature, (°F) °C | 1000 RPM | | 2000 RPM | |
| | 93°C (200°F) | 149°C (300°F) | 93°C (200°F) | 149°C (300°F) |
| Base Stock | 1.02 | 1.92 | 4.12 | 3.85 |
| Example 1 | 0.57 | 0.75 | 0.82 | 0.87 |
| Example 2 | 0.65 | 0.50 | 0.70 | 0.70 |

The product of Example 1 was combined at 0.6 weight percent into a fully formulated hydraulic oil and compared to the same formulation using 0.7 weight percent of commercial zinc dithiophosphate in the Vickers V1O4C pump Wear Test (ASTM D2882). The results were as follows and demonstrated the antiwear performance of the products herein disclosed.

**TABLE 2**

| Formulation Containing | ASTM D28882 Wear, Milligrams |
|---|---|
| Zinc dithiophosphate | 27 |
| Example 1 Product | 22 |

## Claims

1. A process for making a reaction product suitable for use as an additive in lubricating oils which process comprises reacting, in the absence of catalyst, a trialkyl phosphite having the formula (R₁O)₂ POR₂ wherein R₁ represents a C₄ to C₁₈ alkyl and R₂ represents a C₄ to C₁₈ alkyl which may be the same as or different from R₁ with elemental sulfur in a mole ratio of sulfur to phosphite of between 0.8 and 1.2 at a temperature from 75° to 100°C.

2. A process according to claim 1 wherein the trialkyl phosphite comprises one or more substituents which may be the same or different selected from oleyl, 2-ethyl hexyl, 1, 3-dimethyl butyl, tridecyl, isodecyl, octyl or butyl.

3. The use of a reaction product, prepared by reacting in the absence of catalyst a trialkyl phosphite having the formula (R₁O)₂ POR₂ wherein R₁ and R₂ are defined in claims 1 or 2 with elemental sulfur in a mole ratio of sulfur to phosphite of between 0.8 and 1.2 at a temperature from 75°C to 100°C, as an antiwear additive in lubricating oils.

## Patentansprüche

1. Verfahren zur Herstellung eines zur Verwendung als Additiv in Schmierölen geeigneten Reaktionsproduktes, wobei das Verfahren folgendes umfaßt: Umsetzen eines Trialkylphosphits der Formel (R₁O)₂POR₂, in der R₁ einen C₄-C₁₈-Alkylrest und R₂ einen C₄-C₁₈-Alkylrest, der mit R₁ gleich oder davon verschieden sein kann, bedeutet, mit elementarem Schwefel in einem Molverhältnis von Schwefel zu Phosphit von 0,8 bis 1,2 bei einer Temperatur von 75 - 100°C in Abwesenheit eines Katalysators.

2. Verfahren nach Anspruch 1, wobei das Trialkylphosphit einen oder mehrere Substituenten umfaßt, die gleich oder verschieden sein können und bei denen es sich um Oleyl, 2-Ethylhexyl, 1,3-Dimethylbutyl, Tridecyl, Isodecyl, Octyl oder Butyl handelt.

3. Verwendung eines Reaktionsproduktes, das durch Umsetzung eines Trialkylphosphits der Formel (R₁O)₂POR₂, in der R₁ und R₂ die in den Ansprüchen 1 oder 2 definierten Bedeutungen haben, mit elementarem Schwefel in einem Molverhältnis von Schwefel zu Phosphit von 0,8 bis 1,2 bei einer Temperatur von 75 - 100°C in Abwesenheit eines Katalysators erhalten worden ist, als Antiabriebadditiv in Schmierölen.

## Revendications

1. Un procédé de préparation d'un produit de réaction convenant à une utilisation comme additif dans les huiles lubrifiantes, ce procédé étant caractérisé en ce que l'on fait réagir, en l'absence de catalyseur, un trialkylphosphite répondant à la formule:
(R₁O)₂POR₂
dans laquelle:
R₁ représente un radical alkyle en C₄ à C₁₈; et
R₂ représente un radical alkyle en C₄ à C₁₈, qui peut être identique ou différent de R₁,
avec du soufre élémentaire, dans un rapport molaire soufre/phosphite compris entre 0,8 et 1,2, à une température de 75°C à 100°C.

2. Un procédé selon la revendication 1, caractérisé en ce que le trialkylphosphite comprend un ou plusieurs substituants, qui peuvent être identiques ou différents, et qui sont choisis parmi les radicaux oléyle, 2-éthylhexyle, 1,3-diméthylbutyle, tridécyle, isodécyle, octyle ou butyle.

3. L'utilisation d'un produit de réaction préparé par réaction, en l'absence d'un catalyseur, un trialkylphosphite répondant à la formule:
(R₁O)₂POR₂
dans laquelle:
R₁ et R₂ sont définis dans les revendications 1 ou 2,
avec du soufre élémentaire dans un rapport molaire soufre/phosphite compris entre 0,8 et 1,2, à une température de 75°C à 100°C, comme additif anti-usure dans les huiles lubrifiantes.
